(19) Europäisches Patentamt
European Patent Office
Office européen des brevets

(11) **EP 4 685 121 A1**

(12) **EUROPÄISCHE PATENTANMELDUNG**

(43) Veröffentlichungstag:
28.01.2026   Patentblatt 2026/05

(21) Anmeldenummer: 25189481.2

(22) Anmeldetag: **15.07.2025**

(51) Internationale Patentklassifikation (IPC):
*C03C 3/083* (2006.01)     *C03C 3/091* (2006.01)
*C03C 3/095* (2006.01)     *C03C 8/02* (2006.01)
*C03C 17/04* (2006.01)     *C03C 17/34* (2006.01)

(52) Gemeinsame Patentklassifikation (CPC):
**C03C 8/02; C03C 3/083; C03C 3/091; C03C 3/095; C03C 17/04; C03C 17/34;** C03C 2204/08; C03C 2217/72; C03C 2218/119

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität:   **17.07.2024   DE 102024120239**
**31.01.2025   DE 202025100493 U**

(71) Anmelder: **SCHOTT AG**
**55122 Mainz (DE)**

(72) Erfinder:
• **BOESE, Annika**
**55122 Mainz (DE)**
• **MILANOVSKA, Angelina**
**55122 Mainz (DE)**
• **MARTENS, Carmen**
**55122 Mainz (DE)**

(74) Vertreter: **Schott Corporate IP**
**Hattenbergstraße 10**
**55122 Mainz (DE)**

(54) **GLAS- ODER GLASKERAMIKPRODUKT, VERFAHREN ZU DESSEN HERSTELLUNG UND TINTE**

(57)   Die Erfindung betrifft ein Glas- oder Glaskeramikprodukt mit einem Substrat aus einem Glas oder einer Glaskeramik, wobei das Substrat zumindest auf einer Seite auf zumindest einem Teil seiner Oberfläche mit einer im Wesentlichen pigmentfreien Beschichtung versehen ist, wobei die Beschichtung einen zumindest teilweise aufgeschmolzenen Glasfluss aufweist, wobei die Oberfläche der Beschichtung eine mittlere quadratische Höhe Sq von mindestens 0,1 $\mu$m und höchstens 2,5 $\mu$m aufweist, und wobei die Beschichtung eine Kernhöhe Sk von mindestens 1,0 $\mu$m bis höchstens 10 $\mu$m aufweist. Ferner betrifft die Erfindung ein Verfahren und eine Tinte zur Herstellung des Glas- oder Glaskeramikprodukts.

**Figur 1**

EP 4 685 121 A1

**Beschreibung**

Die Erfindung betrifft ein Glas- oder Glaskeramikprodukt mit einer Beschichtung, sowie ein Verfahren zur Herstellung eines solchen Glaskeramikprodukts und eine Tinte zur Herstellung des Glas- oder Glaskeramikprodukts.

Stand der Technik

Aus dem Stand der Technik sind vielfältige Anwendungsfälle für Glas- und Glaskeramikprodukte bekannt. Insbesondere im Falle von scheibenförmigen Glaskeramikprodukten ist das wohl prominenteste Beispiel der Anwendung die Verwendung als Kochfläche.

Glaskeramikkochflächen werden dabei häufig mit funktionalen Beschichtungen auf der Oberseite ausgestattet, die unterschiedliche Aufgaben erfüllen. Im Stand der Technik bekannt sind beispielsweise aus der EP 2 964 854 B1 Beschichtungen, die eine solche Glaskeramikkochfläche vor Kratzern mittels einer auf dem Substrat abgeschiedenen Schicht aus AlSiN schützen. Ferner sind auch Beschichtungen bekannt, die eine Verschmutzung von Kochflächen, insbesondere durch Fingerabdrücke vermeiden sollen. Hier wäre beispielhaft die WO 2023/099833 A1 zu nennen.

Es gibt in jüngerer Vergangenheit auch Ansätze, die sowohl eine Vermeidung von Kratzern auf der Oberfläche eines Substrats als auch die Entstehung von Fingerabdrücken bzw. generell die Verschmutzung der Kochfläche verhindern sollen. Hier wäre wiederum beispielhaft die EP 4 077 231 A1 zu nennen. Darin offenbart ist ein Glaskeramikartikel, erhalten durch ein Verfahren, welches eine Wärmebehandlung zur Keramisierung eines Glases, das zum Bilden einer Glaskeramik geeignet ist, und eine chemische Behandlung einer Oberfläche des Glases vor und/oder nach der Wärmebehandlung zur Keramisierung umfasst, wobei die chemische Oberflächenbehandlung so durchgeführt wird, dass nach der Wärmebehandlung der arithmetische Mittenrauwert der Oberfläche zwischen 2 $\mu$m und 7 $\mu$m beträgt. Dabei wird bezüglich der chemischen Behandlung der Oberfläche insbesondere die Verwendung einer Säurelösung auf Basis von Flusssäure beschrieben.

Die Verwendung von Flusssäure ist tatsächlich zum Ätzen von Glas- und Glaskeramik bereits bekannt, bringt jedoch eine Reihe von Nachteilen mit sich. Zum einen ist der Zeitbedarf zum Ätzen eines Glases oder Glaskeramik, bis sich die oben genannte Rauigkeit eingestellt hat, vergleichsweise hoch. Zum anderen handelt es sich bei Flusssäure um eine in der Handhabung sehr problematische Substanz, für die eine Vielzahl von Sicherheitsmaßnahmen berücksichtigt werden müssen, um sowohl den Schutz der Umwelt als auch den Schutz derjenigen Personen, die mit der Flusssäure arbeiten zu gewährleisten.

Vor diesem Hintergrund besteht im Stand der Technik ein Bedarf an einer Lösung mittels derer mit möglichst geringem Aufwand, sowohl zeitlich als auch bzgl. der Arbeitssicherheit, ein Glas- oder Glaskeramikartikel bereitgestellt werden kann, dessen Oberfläche sowohl unempfindlich gegenüber Kratzern ist als auch die Entstehung von Fingerabdrücken und sonstigen Verschmutzungen weitgehend vermeidet.

Offenbarung der Erfindung

Die vorstehend formulierte Aufgabe wird hinsichtlich eines Glas- oder Glaskeramikprodukts mit den Merkmalen des Anspruchs 1 gelöst. Lösungen bzgl. eines entsprechenden Herstellungsverfahrens und einer hierbei zu verwendenden Tinte sind Gegenstand der Ansprüche 17 und 20. Vorteilhafte Ausgestaltungen sind Gegenstand der abhängigen Ansprüche.

In einem ersten Aspekt betrifft die Erfindung ein Glas- oder Glaskeramikprodukt mit einem Substrat aus einem Glas oder einer Glaskeramik, wobei das Substrat zumindest auf einer Seite auf zumindest einem Teil seiner Oberfläche mit einer im Wesentlichen pigmentfreien Beschichtung versehen ist, wobei die Beschichtung einen zumindest teilweise aufgeschmolzenen, bevorzugt Bor-haltigen Glasfluss aufweist, wobei die Oberfläche der Beschichtung eine mittlere quadratische Höhe Sq von mindestens 0,1 $\mu$m und höchstens 2,5 $\mu$m aufweist, und wobei die Beschichtung eine Kernhöhe Sk von mindestens 1,0 $\mu$m bis höchstens 10 $\mu$m aufweist.

Unter der Bezeichnung "im Wesentlichen pigmentfrei" ist dabei zu verstehen, dass die Beschichtung weniger als 1 Gew.-% Pigment enthält, also zu wenigstens 99 Gew.-% aus dem Glasfluss besteht. Unter einem "Pigment" sind dabei Partikel zu verstehen, die die Transmissionseigenschaften der Beschichtung gegenüber einer Beschichtung, die ausschließlich aus Glasfluss besteht, verändern. Insbesondere kann durch solche Pigmentpartikel eine Farbigkeit der Beschichtung oder eine verminderte Transmission der Beschichtung hervorgerufen werden.

Als "zumindest teilweise aufgeschmolzener" Glasfluss ist ein Glasfluss, also eine Menge an Glaspartikeln mit definierter Größenverteilung zu verstehen, bei dem wenigstens ein Teil der Partikel aufgeschmolzen und wieder erstarrt ist und daher nicht mehr als Partikel in der ursprünglich im Glasfluss vorliegenden Form und Größe vorliegt. Durch diesen aufgeschmolzenen Anteil der Partikel sind die Partikel des Glasflusses zu einer Schicht fest verbunden. Gleichzeitig dient der aufgeschmolzene Teil der Glaspartikel auch dazu, eine Bindung zu dem Substrat herzustellen. Der nicht aufgeschmolzene Teil der Glaspartikel führt dabei dazu, dass die Oberfläche nicht vollständig eben ist, was bei einem vollständig aufgeschmolzenen Glasfluss zu erwarten wäre. Vielmehr stellt sich durch das teilweise Aufschmelzen der Glaspartikel eine definierte Oberflächenrauheit der Beschichtung ein.

Die Rauheit der Oberfläche eines erfindungsgemäßen Glas- oder Glaskeramikprodukts ausgedrückt durch die mittlere quadratische Höhe Sq der Oberfläche beträgt dabei mindestens 0,1 μm und höchstens 2,5 μm. Die mittlere quadratische Höhe der Oberfläche der Beschichtung berechnet sich hierbei gemäß folgender Vorschrift:

$$Sq = \sqrt{\frac{1}{A}\iint_A z^2(x,y)\,dx\,dy}$$

wobei A die betrachtete Fläche der Beschichtung und z die Abweichung eines Messpunktes an Position (x,y) von der mittleren Höhe der Beschichtung ist. Besonders bevorzugt ist dabei die mittlere quadratische Höhe Sq der Beschichtung größer als 0,2 μm, größer als 0,3 μm, größer als 0,4 μm oder besonders bevorzugt größer als 0,5 μm.

Ein weiterer Parameter, der die Beschaffenheit der erfindungsgemäßen Beschichtung beschreibt, ist die Kernhöhe Sk der Oberfläche der Beschichtung. Die Kernhöhe beschreibt dabei die Höhe desjenigen Bereichs innerhalb des Flächenmaterialanteils der Oberfläche der Beschichtung, auf den 100 % der Äquivalenzgerade (auch als gleichwertige Gerade bezeichnet) des Flächenmaterialanteils entfallen. Dieser Bereich wird auch als Kern-Oberfläche bezeichnet. Der Flächenmaterialanteil (auch als "flächenhafter Materialanteil" bezeichnet) beschreibt dabei, über welchen Höhenbereich der Oberfläche der Beschichtung welcher Anteil des Materials der Beschichtung im Bereich der betrachteten Oberfläche entfällt. Effektiv wird so jeder Höhe innerhalb der Oberfläche der Beschichtung derjenige Materialanteil der Oberfläche zugeordnet, der oberhalb dieser Höhe liegt. In einer graphischen Darstellung dieser Kurve wird dementsprechend als Ordinate die Höhe innerhalb der Oberfläche der Beschichtung angegeben, während die Abszisse den Materialanteil in % angibt, der auf den Bereich oberhalb dieser Höhe entfällt.

Die Äquivalenzgrade ist dabei diejenige Sekante der Kurve des Flächenmaterialanteils mit der geringsten auffindbaren Steigung (bzw. dem kleinsten Gradienten), deren Schnittpunkte mit der Kurve des Flächenmaterialanteils bzgl. ihrer Abszisse einen Abstand von 40% aufweisen. Durch Extrapolation der Äquivalenzgrade auf Abszissenwerte von 0% und 100 % lassen sich so die entsprechenden Ordinatenwerte ermitteln, wobei die Kernhöhe der Abstand dieser Ordinatenwerte ist. Demgemäß bedeutet eine geringe Kernhöhe eine sehr kompakte und mithin widerstandsfähige Beschichtung, da ein großer Teil des Oberflächenmaterials auf einen schmalen Bereich konzentriert ist. Die Kernhöhe Sk der Beschichtung kann dabei insbesondere auch 1,5 μm bis 9 μm, 1,5 μm bis 8 μm, 1,5 μm bis 7 μm, 2 μm bis 6 μm oder besonders bevorzugt 2 μm bis 5 μm betragen.

Aus der Zusammenschau der Werte der erfindungsgemäßen Beschichtung bezüglich der mittleren quadratischen Höhe und der Kernhöhe wird deutlich, dass die erfindungsgemäße Beschichtung zum einen eine vergleichsweise raue bzw. matte Oberfläche, gleichzeitig aber auch eine sehr kompakte Beschaffenheit der Beschichtung kombiniert. Folglich zeichnet sich die erfindungsgemäße Beschichtung durch gute Eigenschaften bezüglich der Vermeidung von Fingerabdrücken und sonstigen Verschmutzungen bei gleichzeitig hoher Beständigkeit gegen Kratzer und Abnutzung der Beschichtung aus.

Dabei enthält die Beschichtung ausschließlich Komponenten, die gesundheitlich unbedenklich sind und ist auf einfache und kostengünstige Art und Weise herstellbar.

Bei den Glaspartikeln des Glasflusses der Beschichtung kann es sich dabei insbesondere um Partikel aus Bor-haltigem Glas handeln. Die Verwendung von Bor-haltigem Glasfluss hat dabei unter anderem Vorteile bezüglich der Temperaturwechselbeständigkeit der Beschichtung und verbessert zudem die Haftung der Beschichtung insbesondere dann, wenn es sich bei dem Substrat um eine Glaskeramik handelt. Zudem ist es bei Verwendung eines Bor-haltigen Glasflusses möglich, die Beschichtung bei der Keramisierung des Substrats, also der Umwandlung eines Glassubstrats in ein Glaskeramiksubstrat, einzubrennen. Auf diese Weise kann ein Schritt bei der Herstellung des Produkts, nämlich ein gesonderter Einbrand der Beschichtung (sogenannter Sekundäreinbrand) vermieden werden.

Die zuvor beschriebene matte Anmutung der Beschichtung zeigt sich nach einer Ausführungsform auch darin, dass die Beschichtung einen Glanzwert von höchstens 25, gemessen bei einem Winkel von 60° aufweist. Auch auf diese Weise kann die Entstehung von sichtbaren Verunreinigungen der Beschichtung, insbesondere in Form von Fingerabdrücken vermieden werden. So sind beispielsweise Fingerabdrücke umso stärker auf einer Oberfläche sichtbar, je glänzender die Oberfläche ist.

Zuvor wurden bereits zwei wichtige und einzigartige Parameter der erfindungsgemäßen Beschichtung diskutiert. Die erfindungsgemäße Beschichtung unterscheidet sich jedoch auch im Hinblick auf weitere Oberflächenparameter entscheidend von Beschichtungen, wie sie im Stand der Technik bekannt sind.

So ist nach einer Ausführungsform ferner vorgesehen, dass die Beschichtung eine Schiefheit Ssk von > 0 aufweist. Das Maß der Schiefheit (auch als Skewness bezeichnet) einer Oberfläche gibt dabei Aufschluss darüber, ob die Oberfläche tendenziell eher als Fläche mit Rillen bzw. Tälern beschrieben werden kann, oder eher als Oberfläche mit Spitzen. Im Fall einer Oberfläche mit einer Schiefheit > 0, also einer Fläche mit Rillen ist definitionsgemäß in der Höhenverteilung der Oberfläche die Häufigkeit von Bereichen, die über den Höhenmittelwert hinausragen kleiner als der Anteil von Bereichen, die unterhalb des Höhenmittelwerts liegen. Da dieser Fall nur dann eintreten kann, wenn die unterhalb des Höhenmittelwerts liegenden Bereiche zwar seltener, dafür aber in ihrer Höhe (bzw. Tiefe) deutlich ausgeprägter sind als die Bereiche oberhalb des Höhenmittelwerts, bedeutet dies, dass die Fläche eher durch Täler und Rillen als durch hervorstehende Spitzen beschrieben werden kann.

Rechnerisch lässt sich dabei die Schiefheit ermitteln, indem die dritten Potenzen aller Höhenwerte summiert und durch die dritte Potenz der mittleren quadratischen Höhe Sq der Oberfläche der Beschichtung dividiert werden:

$$Ssk = \frac{1}{Sq^3}\left[\frac{1}{A}\iint_A z^3(x,y)\,dx\,dy\right]$$

Eine Schiefheit > 0, also eine Fläche mit Rillen anstelle von Spitzen hat dabei den Vorteil, dass Rillen deutlich widerstandsfähiger sind als hervorstehende Spitzen. So muss zur Reduzierung der Tiefe einer Rille in der Beschichtung deutlich mehr Material abgetragen werden als zur Reduzierung einer Spitze. Folglich geht eine Schiefheit der Oberfläche von > 0 mit einer höheren Robustheit der Oberflächenbeschaffenheit einher, da die Struktur der Oberfläche beispielsweise auch bei abrasiven Reinigungsvorgängen weniger stark angegriffen wird.

Nach einer weiteren Ausführungsform ist ferner vorgesehen, dass die Oberfläche der Beschichtung eine Kurtosis Sku von > 3, besonders bevorzugt > 3 und < 8 aufweist. Die Kurtosis einer Oberfläche beschreibt dabei die Schärfe eines Oberflächenprofils und wird wie folgt berechnet

$$Sku = \frac{1}{Sq^4}\left[\frac{1}{A}\iint_A z^4(x,y)\,dx\,dy\right]$$

Dabei beschreibt ein Wert der Kurstosis von Sku > 3 eine Oberfläche, die tendenziell eher Zacken als Rundungen aufweist. Eine Oberfläche die von der Art der Oberflächenstrukturen eher Zacken als Rundungen aufweist, hat dabei den Vorteil, dass beispielsweise bei einer Betätigung von berührungsempfindlichen Bedienelementen nur eine geringere Kontaktfläche zwischen Oberfläche der Beschichtung und Finger des Bedieners entsteht. Effektiv kann so die Sichtbarkeit von Fingerabdrücken oder ähnlichem vermieden werden, da diese nur auf den sehr schmalen Spitzen der Oberflächenstrukturen angeordnet sind.

Die Beschichtung weist dabei nach einer weiteren Ausführungsform eine Dicke von 2 bis 10 $\mu$m auf. Die Dicke der Beschichtung ist dabei so gewählt, dass eine hinreichende Stabilität der Beschichtung gewährleistet ist, jedoch gleichzeitig die Transmissionseigenschaften des Substrats durch die Beschichtung geringstmöglich beeinflusst werden. Ferner sind so unterhalb der Beschichtung angeordnete Strukturen weiterhin gut erkennbar. Bevorzugt beträgt die Dicke der Beschichtung wenigstens 3 $\mu$m, besonders bevorzugt wenigstens 4 $\mu$m. Ferner beträgt die Dicke der Beschichtung bevorzugt höchstens 9 $\mu$m, besonders bevorzugt höchstens 8 $\mu$m, ganz besonders bevorzugt höchstens 7 $\mu$m.

Dabei ist nach einer weiteren Ausführungsform ferner vorgesehen, dass zwischen dem Substrat und der Beschichtung zumindest abschnittsweise eine pigmentierte Dekorschicht angeordnet ist. Die pigmentierte Dekorschicht ist dabei bevorzugt direkt auf das Substrat aufgebracht und kann insbesondere durch Inkjet-Druckverfahren oder Siebdruck erzeugt werden. Bei Verwendung des Glas- oder Glaskeramikprodukts als Kochfläche kann es sich bei dem Dekor beispielsweise um eine Kochzonenmarkierung handeln. Durch die Anordnung des Dekors unterhalb der Beschichtung wird das Dekor vor Abrieb beispielsweise infolge einer Reinigung des Glas- oder Glaskeramikprodukts geschützt. Gleichzeitig ist jedoch aufgrund der geringen Dicke der Beschichtung und der Abwesenheit von Pigment in der Beschichtung die Sichtbarkeit des Dekors und insbesondere dessen Kantenschärfe nur geringfügig beeinträchtigt. Dabei kann das Dekor grundsätzlich auch zusammen mit der Beschichtung eingebrannt werden, was die Herstellung des Glas- oder Glaskeramikprodukts vereinfacht.

Dabei ist nach einer bevorzugten Ausführungsform vorgesehen, dass die Konturlinie der unter der Beschichtung angeordneten Dekorschicht bei senkrechter Draufsicht auf das Dekor durch die Beschichtung hindurch in Richtung parallel zur Oberfläche des Substrats einen quadratischen Mittenrauwert Rq von höchstens 20 $\mu$m, bevorzugt höchstens 15 $\mu$m aufweist. Die Konturlinie der Dekorschicht beschreibt dabei den Verlauf des Übergangs zwischen demjenigen Bereich der Oberfläche des Substrats der durch die Dekorschicht bedeckt ist und demjenigen Bereich der Oberfläche des Substrats, der im Wesentlichen frei von der Dekorschicht ist. Als "im Wesentlichen frei" ist dabei ein Bereich zu verstehen, in dem die Dicke der Dekorschicht und mithin die Farbwirkung des Dekors mindestens noch 10%, höchstens jedoch 25% der maximalen Farbwirkung des Dekors beträgt. Der Verlauf der Konturlinie wird dabei analog dem Verlauf des Höhenprofils einer Oberfläche betrachtet, sodass die für die Beschreibung von Oberflächenbeschaffenheiten bekannten Parameter zur Beschreibung des Verlaufs der Konturlinie herangezogen werden können. Demgemäß kann für den Verlauf der Konturlinie unter anderem der quadratische Mittenrauwert Rq angegeben werden, der im Wesentlichen eine Aussage darüber gibt, wie groß der quadratische Mittelwert aller Ordinatenwerte z(x) der Konturlinie an unterschiedlichen Punkten x entlang einer Messtrecke der Länge l ist. Dabei berechnet sich der Wert Rq wie folgt:

$$Rq = \sqrt{\frac{1}{l}\int_0^l z^2(x)\,dx}$$

Effektiv gibt der Wert Rq also eine Konturschärfe einer Kontur des Dekors bei Ansicht durch die strukturierte Beschichtung hindurch wieder. Je kleiner dabei der Wert Rq ausfällt, desto schärfer sind die Konturen des Dekors. Dies ist insbesondere vorteilhaft, da so auch noch sehr feine Dekorelemente im Wesentlichen unverfälscht auch durch die strukturierte Beschichtung hindurch wahrgenommen werden können.

Nach einer weiter bevorzugten Ausführungsform weist dabei das Glas- oder Glaskeramikprodukt eine Dekorschicht auf, die in einem ersten Teilbereich von der Beschichtung bedeckt ist und in einem zweiten Teilbereich nicht von der Beschichtung bedeckt ist. Dabei unterscheidet sich der quadratische Mittenrauwert Rq der Konturlinie der Dekorschicht im ersten Teilbereich nur um höchstens 10%, bevorzugt höchstens 5% vom quadratische Mittenrauwert Rq der Konturlinie der Dekorschicht im zweiten Teilbereich.

Alternativ kann das Dekor jedoch auch auf der Beschichtung aufgebracht sein, was die Herstellung des Glas- oder Glaskeramikprodukts vereinfachen kann. So kann beispielsweise die matte Beschichtung großflächig mittels eines Siebdruckverfahrens aufgebracht werden und anschließend kann das so vorbereitete Glas- oder Glaskeramikprodukt in einem weiteren Schritt mit einem Dekor versehen werden.

Die Kombination aus Dekorschicht und Beschichtung weist dabei nach einer weiteren Ausführungsform eine Dicke von höchstens 15 μm, bevorzugt höchstens 12 μm, besonders bevorzugt höchstens 10 μm auf.

Zuvor wurde bereits angeführt, dass die Beschichtung zumindest auf einem Teil der Oberfläche des Substrats aufgebracht ist. Das bedeutet, dass die Beschichtung durchaus auch Ausnehmungen aufweisen kann, beispielsweise um einen Bereich zu schaffen, in dem ein Display angeordnet werden kann. Durch eine Aussparung aus der Beschichtung, also einem Bereich der Oberfläche, auf dem keine Beschichtung aufgebracht wird, kann so eine Darstellung des Displays gegenüber einer vollflächigen Beschichtung verbessert sein. Nach einer weiteren Ausführungsform ist es jedoch vorgesehen, dass die Beschichtung auf einer Seite des Substrats vollflächig aufgebracht ist, was die Herstellung des Glas- oder Glaskeramikprodukts vereinfachen kann.

Zuvor wurde bereits ausgeführt, dass der Glasfluss bevorzugt Bor-haltig ausgeführt ist. Nach einer bevorzugten Ausführungsform ist dabei ferner vorgesehen, dass der Glasfluss die folgende Zusammensetzung in Gew.-% auf Oxidbasis aufweist:

| | |
|---|---|
| $SiO_2$ | 75 - 85 |
| $Al_2O_3$ | 0,1 - 5 |
| $B_2O_3$ | 10 - 15 |
| $Na_2O$ | 1 - 5 |
| $K_2O$ | 0,1 - 1,5 |

Ein Glasfluss dieser Zusammensetzung eignet sich insbesondere für einen Einbrand der Beschichtung im Zuge der Keramisierung des Substrats, was deutliche Vorteile hinsichtlich der Herstellung des erfindungsgemäßen Glas- oder Glaskeramikprodukts mit sich bringt. Dabei kann der verwendete Glasfluss auch aus einer Mischung unterschiedlicher Glasarten bestehen. Durch die Mischung unterschiedlicher Glasarten ist es beispielsweise möglich, den Glasfluss in seinen physikalischen Eigenschaften an die zur Herstellung der Beschichtung gegebenen Anforderungen anzupassen.

Ein solcher beigemischter Glasfluss kann dabei auch eine Zusammensetzung aufweisen, die von der oben genannten Zusammensetzung abweicht. So kann ein solcher Glasfluss beispielsweise die folgende Zusammensetzung in Gew.-% auf Oxidbasis aufweisen:

| | |
|---|---|
| $SiO_2$ | 50 - 65 |
| $B_2O_3$ | 14 - 20 |
| $Al_2O_3$ | 13 - 20 |
| $Li_2O$ | 2,0 - 4,0 |
| $MgO$ | 1,0 - 2,5 |
| $CaO$ | 1,5 - 2,5 |
| $SrO$ | 1,5 - 3,0 |
| $ZnO$ | 1,5 - 3,0 |
| $ZrO_2$ | 0,5 - 1,5. |

Bei der konkreten Wahl des Glasflusses bzw. einer Mischung unterschiedlicher Glasflüsse zur Herstellung der Beschichtung können grundsätzlich eine Vielzahl von Materialparametern des Glasflusses einen Einfluss auf die Eigenschaften der erzeugten Beschichtung haben. So ist es beispielsweise für die thermische Stabilität der Beschichtung vorteilhaft, wenn sich der thermische Ausdehnungskoeffizient des Glasflusses und mithin der Beschichtung nur geringfügig von dem thermischen Ausdehnungskoeffizienten des Substrates unterscheidet. Die Oberflächenbeschaffenheit der Beschichtung kann ferner durch Wahl eines Materials mit einem geeigneten Erweichungspunktes beeinflusst werden. Dabei ist es vorteilhaft, wenn der Erweichungspunkt relativ zu der Einbrandtemperatur der Beschichtung so gewählt wird, dass die Partikel des Glasflusses beim Einbrand der Beschichtung im Rahmen der Keramisierung des Substrats nur teilweise aufgeschmolzen werden, sodass sich die gewünscht raue Oberflächenbeschaffenheit ergibt.

Dabei ist nach einer weiteren Ausführungsform ferner vorgesehen, dass das Substrat scheibenförmig ist und eine Dicke zwischen 2 mm und 6 mm, bevorzugt zwischen 3 mm und 5 mm, besonders bevorzugt eine Dicke von 4 mm aufweist. Unter einem "scheibenförmigen" Substrat ist dabei ein Substrat zu verstehen, dessen Länge und Breite um wenigstens eine Größenordnung größer als dessen Dicke ist. Insbesondere kann es sich bei dem Glas- oder Glaskeramikprodukt um ein Kochfeld handeln.

Als Substrat können dabei unterschiedliche Materialien verwendet werden.

So ist nach einer Ausführungsform vorgesehen, dass das Substrat transparent mit einer Transmission $\tau_{vis}$ von größer 80%, bevorzugt größer 85%, ist und eine Buntheit c* von weniger als 10, insbesondere weniger als 8 aufweist. Die Buntheit c* berechnet sich dabei gemäß Definition des CIELab Farbsystems als

$$c^* = \sqrt{a^{*2} + b^{*2}}.$$

Effektiv handelt es sich also um ein transparentes und weitgehend farbneutrales Substrat.

Die Zusammensetzung eines solchen Substrats in Gew.-% auf Oxidbasis kann dabei beispielsweise wie folgt gewählt sein:

| | |
|---|---|
| $SiO_2$ | 64 - 68 |
| $Al_2O_3$ | 19 - 23 |
| $Li_2O$ | 3,2 - 4,2 |
| $MgO$ | 0,2 - 1,0 |
| $Na_2O + K_2O$ | 0,1 - 1,5 |
| $BaO$ | 0 - 1,5 |
| $CaO + SrO$ | 0 - 1,5 |
| $ZnO$ | 1 - 2,5 |
| $TiO_2$ | 1,6 - 2,5 |
| $ZrO_2$ | 1,2 - 2,0 |
| $SnO_2$ | 0 - 0,5 |
| $Nd_2O_3$ | 0,005 - 0,15 |
| $Fe_2O_3$ | 0,001 - 0,03 |

Alternativ hierzu ist nach einer weiteren Ausführungsform vorgesehen, dass das Substrat volumengefärbt ist und eine Transmission $\tau_{vis}$ von kleiner 10% aufweist. Als "volumengefärbt" ist dabei ein Substrat zu verstehen, das seine Farbigkeit nicht durch eine Beschichtung erhält, sondern das Elemente innerhalb des Materials enthält, die zu einer Farbigkeit des Materials selbst beitragen. Eine solche Volumenfärbung kann beispielsweise durch Elemente wie Chrom, Vanadium oder Molybdän herbeigeführt werden, die der Glaszusammensetzung beigemischt sind. Beispielhaft kann ein solches Substrat die folgende Zusammensetzung in Gew.-% auf Oxidbasis aufweisen:

| | |
|---|---|
| $Li_2O$ | 3,0 - 4,2 |
| $Na_2O + K_2O$ | 0,2 - 1,5 |
| $MgO$ | 0 - 1,5 |
| $CaO + SrO + BaO$ | 0 - 4 |
| $ZnO$ | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |

| | (fortgesetzt) |
|---|---|
| $P_2O_5$ | 0 - 3 |
| $SnO_2$ | 0,1 - <0,6 |
| $TiO_2 + ZrO_2 + SnO_2$ | 3,8 - 6 |
| $V_2O_5$ | 0,01 - 0,06 |
| $Fe_2O_3$ | 0,03 - 0,2 |

In einer weiteren alternativen Ausführungsform ist ferner vorgesehen, dass das Substrat transluzent mit einer Transmission $\tau_{vis}$ von 2% bis 25% oder opak mit einer Transmission $\tau_{vis}$ von 0,1% bis 2% ist. Insbesondere kann es sich hierbei um eine Glaskeramik mit einer Zusammensetzung handeln, wie sie zuvor mit Bezug auf ein transparentes Substrat beschrieben wurde, wobei das Substrat einen hohen Volumenanteil an Keatit in der Kristallphase aufweisen kann. Im Falle eines opaken Substrats kann dabei ferner im CIELab-Farbraum eine Farbgebung von L* 85 - 97, a* von -1,5 - 0,5 und b* -6 - 0,5 aufweisen. Alternativ kann im Falle eines transluzenten Substrats die Farbigkeit des Substrats wie folgt ausgestaltet sein: L* = 72 - 93, a* = -5,5 - 0, b* = -7 - 0,5 bei einer Transmission von 2% bis 10%, oder alternativ hierzu: L* = 60 - 82, a* = -7,5 - -2, b* = - 19 - -4,5 bei einer Transmission von 10% bis 25%.

Insbesondere bei Verwendung eines erfindungsgemäßen Glas- oder Glaskeramikprodukts als Kochfläche ist dabei nach einer weiteren Ausführungsform vorgesehen, dass das Substrat aus einer LAS-Glaskeramik, also einer Glaskeramik aus einem Lithium-Aluminium-Silikat besteht. Derartige Substrate weisen einen sehr niedrigen thermischen Ausdehnungskoeffizienten auf und sind sehr beständig gegenüber Temperaturänderungen, sodass sie insbesondere für die thermischen Anforderungen einer Kochfläche hervorragend geeignet sind.

Dabei ist nach einer weiteren Ausführungsform ferner vorgesehen, dass das Substrat wenigstens eine Ausnehmung aufweist. Insbesondere kann es sich bei einer solchen Ausnehmung um eine Öffnung in dem Substrat handeln, durch die bei einer Verwendung des Substrats als Kochfläche ein Dunstabzug (auch als Downdraft bezeichnet) in die Kochfläche integriert werden kann. Dabei erstreckt sich die Beschichtung auf dem Substrat bevorzugt bis an die Ränder der Ausnehmung, sodass ein nahtloser Übergang des beschichteten Bereichs in die Ausnehmung erzielt wird. Eine solche Ausnehmung in einem Substrat kann dabei durch eine Vielzahl von Verfahren erzeugt werden, insbesondere durch Bohren, Fräsen, Wasserstrahlschneiden, oder ähnliches.

Nach einer weiteren Ausführungsform ist ferner vorgesehen, dass eine in einem Abstand von 0,5 mm unterhalb des Glas- oder Glaskeramikprodukts angeordnete Leuchtquelle bei einer Dicke des Substrats von 4 mm ein Halo von höchstens 1,2, bevorzugt höchstens 1,15 erzeugt. Weiter bevorzugt erzeugt eine in einem Abstand von 1,75 mm unterhalb des Glas- oder Glaskeramiksubstrats angeordnete Leuchtquelle bei einer Dicke des Substrats von 4 mm ein Halo von höchstens 1,4, bevorzugt höchstens 1,3. Der genannte Abstand bezieht sich dabei auf den Abstand zwischen der Oberseite der Leuchtquelle und der Unterseite des Substrats. Unter einem "Halo" ist dabei ein Maß für die Verzerrung der Wahrnehmung einer Leuchtquelle bei Transmission durch das Substrat und die auf dem Substrat angeordnete Beschichtung zu verstehen.

Hierzu wird das von einer Kamera aufgenommene Intensitätsprofil der Leuchtquelle in Abwesenheit des Glas- oder Glaskeramikprodukts mit einem Intensitätsprofil verglichen, das durch das Glas- oder Glaskeramikprodukt hindurch bei einem definierten Abstand zwischen der Leuchtquelle und der Unterseite des Substrats mit derselben Kamera bei identischer Anordnung von Kamera und Leuchtquelle aufgenommen wird. Dabei ist bevorzugt die Unterseite des Substrats glatt, sodass an der Unterseite des Substrats möglichst keine Streuung auftritt. Zur Bewertung des Streuverhaltens werden die Halbwertsbreiten der gemessenen Intensitätsprofile mit und ohne Substrat über der Leuchtquelle miteinander verglichen, wobei sich der Wert des Halos aus dem Quotienten aus der Halbwertsbreite mit Substrat, dividiert durch die Halbwertsbreite ohne Substrat ergibt. Bei einem Wert von 1 beeinflusst dementsprechend das über der Leuchtquelle angeordnete Substrat mit der darauf angeordneten Beschichtung die gemessene Intensitätsverteilung nicht. Bei Werten größer 1 ist hingegen ein Streuverhalten des beschichteten Substrats festzustellen.

In einem weiteren Aspekt betrifft die Erfindung ein Verfahren zur Herstellung eines Glaskeramikprodukts wie es zuvor beschrieben wurde, wobei das Verfahren die nachfolgenden Schritte aufweist:

a. Bereitstellen eines Substrats aus Glas,
b. Aufbringen einer Schicht einer Tinte umfassend einen Glasfluss und ein Druckmedium auf wenigstens einen Teilbereich einer Oberfläche des Substrats, wobei das Aufbringen bevorzugt mittels Siebdruck erfolgt,
c. Keramisieren des beschichteten Substrats

In dem Verfahren wird dementsprechend in einem gemeinsamen Verfahrensschritt c. sowohl das Substrat keramisiert, also von Glas in Glaskeramik umgewandelt, als auch die Beschichtung eingebrannt. Folglich kann ein gesonderter Schritt zum Einbrennen der Beschichtung entfallen, was die Herstellung des Glas- oder Glaskeramikprodukts deutlich vereinfacht.

Zur Keramisierung des beschichteten Substrats kann dabei beispielsweise wie folgt vorgegangen werden:

a) Aufheizen von Raumtemperatur auf 680°C innerhalb von 23 Minuten,
b) Temperaturerhöhung innerhalb von 19 Minuten von 680°C, auf 800°C,
c) Temperaturerhöhung von 800°C auf 918°C (Maximaltemperatur) innerhalb von 24 Minuten
d) Halten der Maximaltemperatur für 10 Minuten
e) Abkühlen auf 800°C innerhalb von 20 Minuten,
f) Schnelles Abkühlen auf Raumtemperatur innerhalb weniger als 150 Minuten.

Alternativ hierzu kann die Keramisierung wie folgt durchgeführt werden:

a) Schnelles Aufheizen von Raumtemperatur auf 740°C in 20 bis 26 Minuten, insbesondere 24 Minuten,
b) Temperaturerhöhung von 740°C auf 825°C in 12 bis 18 Minuten, insbesondere 14 Minuten,
c) Temperaturerhöhung von 825°C auf 930°C (Maximaltemperatur) in 4 bis 8 Minuten, insbesondere 6 Minuten,
d) Halten der Maximaltemperatur für 4 bis 8 Minuten, insbesondere 6 Minuten,
e) Abkühlen auf 800°C innerhalb von 8 bis 16 Minuten, insbesondere innerhalb von 10 Minuten,
f) Schnelles Abkühlen auf Raumtemperatur.

Das Aufbringen der Beschichtung erfolgt dabei nach einer weiteren Ausführungsform mittels Siebdruck, wobei für den Siebdruck ein Sieb mit einer Siebstärke von 140-31 bis 54-64 verwendet wird. Insbesondere hat sich dabei ein Sieb der Siebstärke 77-55 als vorteilhaft erwiesen. Dabei kann es auch vorgesehen sein, dass das verwendete Sieb Bereiche aufweist, in denen kein Glasfluss auf das Substrat übertragen wird, sodass sich auf einfache Art und Weise Aussparungen in der Beschichtung realisieren lassen. Insbesondere kann dabei auch ein Sieb verwendet werden, das eine feine Struktur in der Beschichtung erzeugt, wodurch der Flächenbelegungsgrad der Beschichtung, also das Verhältnis von beschichteter zu unbeschichteter Oberfläche im beschichteten Bereich des Substrats, kleiner als 100% wird. Dabei können beispielsweise Muster in der Beschichtung erzeugt werden, die die Sichtbarkeit von Kratzern oder Verunreinigungen der Oberfläche weiter reduzieren. Dabei unterschreitet der Flächenbelegungsgrad bevorzugt einen Wert von 80% nicht.

Nach einer weiteren Ausführungsform ist dabei ferner vorgesehen, dass vor dem Aufbringen der Beschichtung auf das Substrat eine Dekorschicht auf das Substrat aufgebracht wird, wobei die Beschichtung anschließend zumindest abschnittsweise auf die Dekorschicht aufgebracht wird. Dabei kann die Dekorschicht insbesondere mittels Inkjet-Druckverfahren auf das Substrat aufgebracht werden. Alternativ kann jedoch auch vorgesehen sein, dass die Dekorschicht nach dem Verfahrensschritt b. aufgebracht wird, also auf der Beschichtung angeordnet ist.

Zuvor wurde bereits ausgeführt, dass das Substrat auch eine Ausnehmung aufweisen kann, beispielsweise zur Integration eines Dunstabzugs. Eine solche Ausnehmung wird dabei bevorzugt in das Substrat eingebracht, bevor das Substrat beschichtet wird. In diesem Fall kann anschließend die Beschichtung bis an den Rand der Ausnehmung auf das Substrat aufgebracht werden, sodass die Beschichtung nicht durch den Herstellungsprozess der Ausnehmung beeinträchtigt wird. Es ist jedoch auch möglich, die Ausnehmung nach der Keramisierung in das bereits beschichtete Substrat einzubringen.

In einem weiteren Aspekt betrifft die Erfindung eine Tinte zur Herstellung eines Glas- oder Glaskeramikprodukts wie es zuvor beschrieben wurde, wobei die Tinte einen Bor-haltigen Glasfluss und ein Druckmedium aufweist, wobei der Glasfluss eine Körnung von $D_{10}$ größer 1 $\mu$m und $D_{90}$ kleiner 20 $\mu$m, bevorzugt $D_{90}$ kleiner 15 $\mu$m aufweist. Bei dem Druckmedium handelt es sich dabei insbesondere um ein Medium, das als Lösungsmittel Dipropylenglykolmonomethylether enthält, was insbesondere bezüglich seiner biologischen Verträglichkeit besonders vorteilhaft ist. Alternativ hierzu kann ein Druckmedium auf Grundlage von Naphtha als Lösungsmittel eingesetzt werden.

Bei dem Glasfluss handelt es sich dabei bevorzugt um Partikel aus einem Borosilikatglas, wobei das Glas vorzugsweise die nachfolgende Zusammensetzung in Gew.-% auf Oxidbasis aufweist:

| | |
|---|---|
| $SiO_2$ | 75 - 85 |
| $Al_2O_3$ | 0,1 - 5 |
| $B_2O_3$ | 10 - 15 |
| $Na_2O$ | 1 - 5 |
| $K_2O$ | 0,1 - 1,5 |

Nach einer weiteren Ausführungsform ist dabei vorgesehen, dass das Verhältnis von Glasfluss zu Druckmedium in der Tinte zwischen 10:15 und 10:5 liegt, was sich besonders vorteilhaft auf die Druckeigenschaften der Tinte auswirkt.

Die Erfindung soll nachfolgend anhand der Figuren und ohne Beschränkung hierauf eingehender beschrieben werden. Gleiche Bezugszeichen bezeichnen dabei gleiche oder ähnliche Elemente.

Es zeigen:

Fig. 1:    schematische Darstellungen unterschiedlicher Ausführungsformen eines beispielhaften Glas- oder Glaskeramikprodukts,

Fig. 2:    eine schematische Darstellung eines beispielhaften Verfahrens zur Herstellung eines beispielhaften Glaskeramikprodukts

Fig. 3:    eine Darstellung eines Oberflächenprofils einer matten Oberfläche als Vergleichsbeispiel,

Fig. 4:    ein Histogramm einer beispielhaften Korngrößenverteilung eines Glasflusses zur Herstellung einer Beschichtung,

Fig. 5:    eine perspektivische Darstellung des Oberflächenprofils einer mit dem Glasfluss aus Figur 4 hergestellten Beschichtung,

Fig. 6:    eine Darstellung des Oberflächenprofils entlang einer Linie innerhalb der in Fig. 5 gezeigten Oberfläche

Fig. 7:    ein Histogramm einer weiteren beispielhaften Korngrößenverteilung eines Glasflusses zur Herstellung einer Beschichtung,

Fig. 8:    eine perspektivische Darstellung des Oberflächenprofils einer mit dem Glasfluss aus Figur 7 hergestellten Beschichtung,

Fig. 9:    eine Darstellung des Oberflächenprofils entlang einer Linie innerhalb der in Fig. 8 gezeigten Oberfläche,

Fig. 10 und 11:    eine Darstellung eines unterhalb der Beschichtung angeordneten Dekors in Draufsicht auf ein beispielhaftes Glaskeramikprodukt und ein hieraus abgeleitete Konturlinie der Dekorschicht,

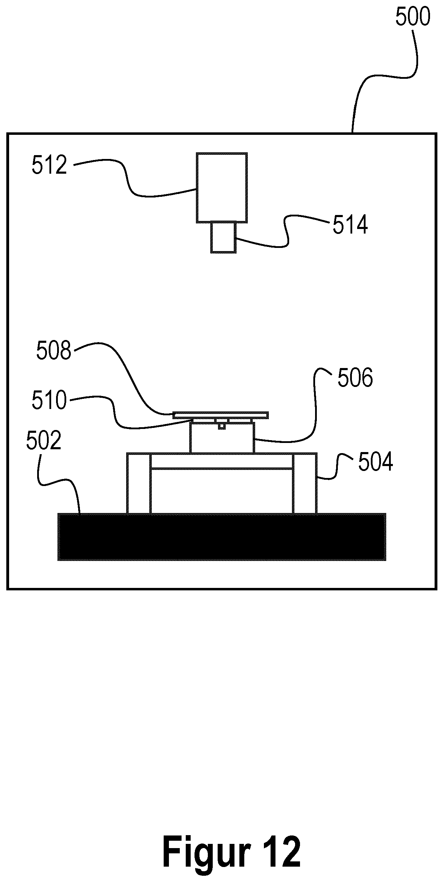

Fig.12:    einen beispielhaften Messaufbau zur Bestimmung eines Halo-Wertes.

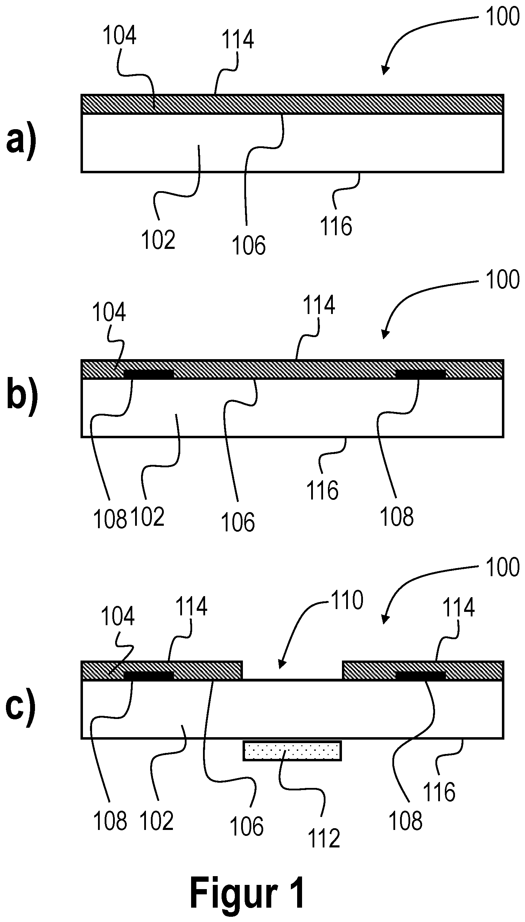

Figur 1 zeigt schematische Darstellungen unterschiedlicher Ausführungsformen eines beispielhaften Glas- oder Glaskeramikprodukts 100. Dabei zeigt die Figur 1 a) den einfachsten Fall, bei dem auf einem scheibenförmigen Substrat 102 aus Glas oder Glaskeramik auf einer Oberfläche 106 unmittelbar eine Beschichtung 104 aufgebracht ist. Die Beschichtung weist dabei eine raue Oberfläche 114 mit einer mittleren quadratischen Höhe Sq im Bereich von 0,1 $\mu$m bis 2,5 $\mu$m und einer Kernhöhe Sk der Beschichtung 104 von 1,5 $\mu$m bis 10 $\mu$m auf, wodurch die Beschichtung 104 eine matte Anmutung aufweist. Dabei ist zwischen der Beschichtung 104 und dem Substrat 102 zunächst keine weitere Beschichtung, insbesondere in Form eines Dekors vorgesehen. Bei dem Substrat 102 handelt es sich bevorzugt um eine Lithium-Aluminium-Silikat-Glaskeramik (LAS-Glaskeramik), die insbesondere für Anwendungen als Kochfläche aufgrund ihres im Allgemeinen geringen thermischen Ausdehnungskoeffizienten sehr gut geeignet ist. Dabei kann es sich bei dem Substrat 102 sowohl um ein transparentes, transluzentes oder opakes Material handeln. Ferner kann das Substrat 102 im Wesentlichen farblos oder volumengefärbt vorliegen.

In der dargestellten Ausführungsform ist dabei die Beschichtung 104 auf der Oberseite des Substrats 102 aufgebracht, welche bei Nutzung des Produkts 100 als Kochfläche dem Anwender zugewandt wäre und auf der beispielsweise Kochgeschirr angeordnet würde. Auch wenn in der Figur 1 in allen Ausgestaltungen keine weitere Beschichtung auf der Unterseite 116 des Substrats 102 gezeigt ist, ist eine solche zusätzliche Unterseitenbeschichtung nicht grundsätzlich ausgeschlossen. Vielmehr ist insbesondere im Falle eines transparenten Substrats 102 die Nutzung einer möglichst blickdichten Unterseitenbeschichtung zusätzlich zu der Oberseitenbeschichtung 104 vorteilhaft, beispielsweise, um unterhalb des Substrats 102 angeordnete Elektronikkomponenten zu verbergen.

Die Dimensionen der in Figur 1 dargestellten Elemente sind aus Gründen der Darstellbarkeit stark überzeichnet und insbesondere in ihrer Relation nicht realitätsnah. So wäre eine bevorzugte Dicke für das Substrat 102 beispielsweise 4 mm, während die Beschichtung 104 bevorzugt lediglich eine Dicke im Bereich von 2 bis 10 $\mu$m aufweist.

Gleichermaßen ist auch die Längenausdehnung des Substrats 102 lediglich exemplarisch dargestellt und üblicherweise wäre die Dicke des Substrats 102 um wenigstens eine Größenordnung kleiner als dessen Länge.

In der Figur 1 b) ist eine weitere Ausführungsform des Glas- oder Glaskeramikprodukts 100 dargestellt, bei dem auf der Oberfläche 106 des Substrats 102 zusätzlich eine weitere Beschichtung 108 in Form eines Dekors aufgebracht ist. Das Dekor 108 ist dabei in der dargestellten Ausführungsform vollständig von der Beschichtung 104 überdeckt und mithin gegen äußere Einflüsse geschützt. Durch das direkte Aufbringen des Dekors 108 auf der im allgemeinen sehr glatten Oberfläche 106 des Substrats 102 kann dabei eine hohe Kantenschärfe des Dekors 108 gewährleistet bleiben, während gleichzeitig die raue Oberfläche 114 der Beschichtung 104 dem Glas- oder Glaskeramikprodukts 100 insgesamt eine matte Anmutung verleiht. Bei dem Dekor 108 kann es sich dabei beispielsweise um Kochzonenmarkierungen, Herstellerlogos oder anderweitige Markierungen handeln. Neben der hier dargestellten Ausgestaltung, bei der das Dekor 108 vollständig durch die Beschichtung 104 überdeckt ist, wäre es im Rahmen der Erfindung auch möglich, dass das Dekor 108 nur teilweise durch die Beschichtung 104 überdeckt ist, es also Bereiche des Dekors 108 gibt, die freigelegt sind.

Obwohl in den Figuren 1 a) und 1 b) die Beschichtung 104 jeweils als vollflächige Beschichtung einer Oberfläche 106 des Substrats 102 dargestellt ist, ist es prinzipiell auch denkbar, dass sich die Beschichtung 104 nur über einen Teil der Oberfläche 106 des Substrats 102 erstreckt und mithin Bereiche existieren, in denen die Beschichtung 104 Aussparungen aufweist. Dieser Fall ist in der Figur 1 c) dargestellt. In der hier dargestellten Ausführungsform, die auf der Ausführungsform der Figur 1 b) aufbaut, weist die Beschichtung 104 in der Mitte der Darstellung eine Ausnehmung 110 auf, in der die Oberfläche 106 des Substrats 102 freigelegt ist. Eine solche Aussparung 110 kann insbesondere bereits bei der Herstellung der Beschichtung 104 berücksichtigt werden, indem der entsprechende Bereich beim Aufdrucken der Beschichtung 104 auf die Oberfläche 106 des Substrats 102 ausgespart wird, beispielsweise durch eine entsprechende Maskierung des Substrats 102 oder durch eine entsprechende Auslegung eines Siebs zum Aufbringen der Beschichtung 104 mittels eines Siebdruckverfahrens.

Eine solche Aussparung 110 kann insbesondere dann vorteilhaft sein, wenn unterhalb des Substrats 102 Anzeigevorrichtungen 112, beispielsweise in Form von Sieben-Segment-Anzeigen oder Vollfarbdisplays angeordnet sind. Eine Bildwiedergabe solcher Anzeigevorrichtungen 112 würde bei Transmission durch die Beschichtung 104 aufgrund ihrer rauen Oberfläche verfälscht. Dies kann jedoch durch eine entsprechende Aussparung in der Beschichtung 104 vermieden werden.

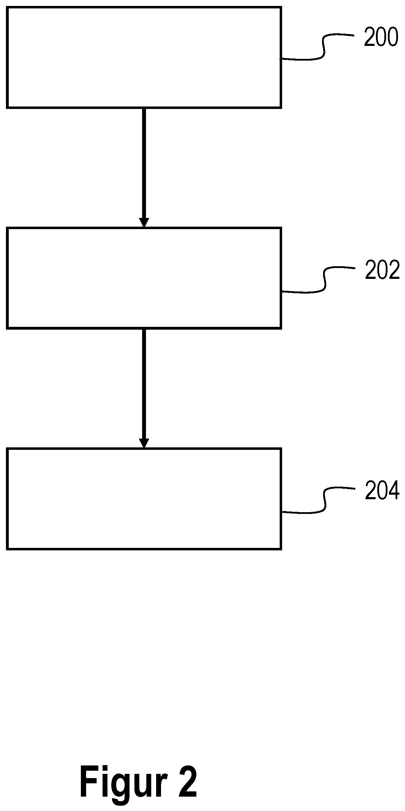

Die Figur 2 zeigt eine schematische Darstellung eines beispielhaften Verfahrens zur Herstellung eines beispielhaften Glaskeramikprodukts 100. Dabei wird in einem ersten Verfahrensschritt 200 ein Substrat 102 aus Glas bereitgestellt, das bereits auf die für das Endprodukt gewünschten Maße zugeschnitten sein kann. Ferner kann hier auch eine Vorbehandlung der zu beschichtenden Oberfläche 106 des Substrats 102 erfolgen, beispielsweise durch eine Politur der Oberfläche 106 um eine möglichst glatte, ebene Oberfläche 106 einzustellen.

In einem zweiten Verfahrensschritt 202 wird dann eine Tinte umfassend einen Glasfluss und ein Druckmedium auf wenigstens einen Teilbereich der Oberfläche 106 des Substrats 102 aufgebracht. Der Glasfluss weist dabei bevorzugt eine Körnung von $D_{10}$ größer 1 $\mu$m und $D_{90}$ kleiner 20 $\mu$m, bevorzugt $D_{90}$ kleiner 15 $\mu$m auf. Zum Aufbringen der Tinte auf die Oberfläche 106 des Substrats 102 können dabei prinzipiell beliebige Druckverfahren eingesetzt werden, die dazu geeignet sind, einen Glasfluss mit der angegebenen Körnung zu verarbeiten. Besonders bevorzugt ist hier jedoch das Aufbringen der Tinte mittels eines Siebdruckverfahrens. Ein Siebdruckverfahren hat dabei den Vorteil, dass zum einen mit geringem Aufwand großflächige Beschichtungen hergestellt werden können, während durch eine entsprechende Gestaltung des verwendeten Siebs gezielt Bereiche in der Beschichtung 104 ausgespart werden können. Auf diese Weise können beispielsweise Strukturen, wie sie zuvor mit Bezug auf die Figur 1 c) beschrieben wurden, erzeugt werden.

Das für den Siebdruck verwendete Sieb ist dabei grundsätzlich an das verwendete Druckmedium und den Glasfluss angepasst auszuwählen. Es hat sich hier aber als besonders vorteilhaft erwiesen, bei Verwendung eines Druckmediums auf Basis von Naphtha als Lösungsmittel ein Sieb der Stärke 140-31 einzusetzen.

In einem dritten Verfahrensschritt 204 wird dann das bedruckte Substrat 102 keramisiert. Hierzu kann beispielsweise das nachfolgende Keramisierungsprogramm verwendet werden, welches jedoch lediglich exemplarisch angegeben wird und nicht als Einschränkung verstanden werden soll.

g) Aufheizen von Raumtemperatur auf 680°C innerhalb von 23 Minuten,

h) Temperaturerhöhung innerhalb von 19 Minuten von 680°C, auf 800°C,

i) Temperaturerhöhung von 800°C auf 918°C (Maximaltemperatur) innerhalb von 24 Minuten

j) Halten der Maximaltemperatur für 10 Minuten

k) Abkühlen auf 800°C innerhalb von 20 Minuten,

l) Schnelles Abkühlen auf Raumtemperatur innerhalb weniger als 150 Minuten.

Alternativ hierzu kann die Keramisierung wie folgt durchgeführt werden:

g) Schnelles Aufheizen von Raumtemperatur auf 740°C in 20 bis 26 Minuten, insbesondere 24 Minuten,

h) Temperaturerhöhung von 740°C auf 825°C in 12 bis 18 Minuten, insbesondere 14 Minuten,

i) Temperaturerhöhung von 825°C auf 930°C (Maximaltemperatur) in 4 bis 8 Minuten, insbesondere 6 Minuten,

j) Halten der Maximaltemperatur für 4 bis 8 Minuten, insbesondere 6 Minuten

k) Abkühlen auf 800°C innerhalb von 8 bis 16 Minuten, innerhalb von 10 Minuten,

l) Schnelles Abkühlen auf Raumtemperatur.

Im Zuge der Keramisierung des Substrats 102 wird dabei nach einer Keimbildungsphase, während der Kristallisationskeime innerhalb des Substrats 102 gebildet werden, durch eine weitere Steigerung der Temperatur ein kontrolliertes Kristallwachstum angeregt, wodurch das Glassubstrat 102 in eine Glaskeramik mit definierten mechanischen und optischen Eigenschaften umgewandelt wird. Aufgrund der hohen Temperaturen während der Keramisierung schmilzt ferner auch der auf der Oberfläche 106 des Substrats 102 befindliche Glasfluss teilweise auf, während das Druckmedium der Tinte im Wesentlichen rückstandslos verdampft. Dabei verbindet sich der aufgeschmolzene Glasfluss mit dem Glassubstrat 102, wodurch eine sehr robuste und gegen mechanische Belastung weitgehend unempfindliche Beschichtung 104 auf der Oberfläche 106 des Substrats 102 entsteht. Der nicht aufgeschmolzene Teil des Glasflusses bildet dabei eine unebene Struktur an der Oberfläche 114 der Beschichtung 104, durch die die erfindungsgemäßen Oberflächenparameter bewirkt werden.

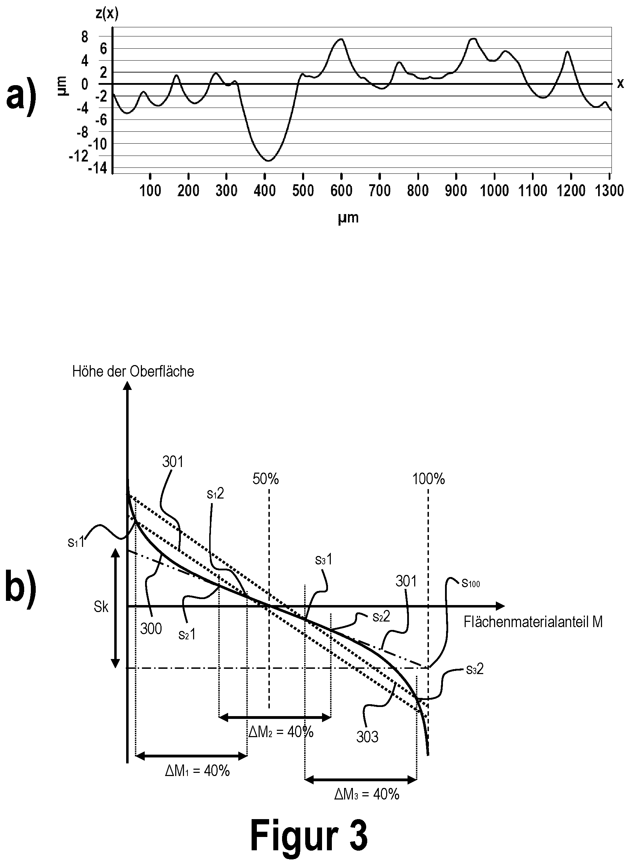

Die Figur 3 a) zeigt eine schematische Darstellung des Höhenprofils einer Oberfläche zur Erklärung der erfindungsgemäßen Oberflächenparameter. Dabei ist entlang einer Messstrecke innerhalb der Oberfläche für die unterschiedlichen Punkte entlang der Messstrecke (x-Achse) jeweils die Höhe z(x) der Oberfläche über einer Nulllinie in μm dargestellt. Die Nulllinie ist dabei auf einer Höhe angeordnet, für die sich die Abweichungen der lokalen Erhebungen der Oberfläche von der Nulllinie entlang der Messtrecke zu Null summieren. Der hier dargestellte zweidimensionale Fall ist lediglich zur Erklärung der zuvor bereits benannten und beschriebenen Oberflächenparameter gewählt. Die zur Beschreibung des erfindungsgemäßen Gegenstands herangezogenen Oberflächenparameter werden tatsächlich jedoch nicht entlang einer einzelnen Linie innerhalb der Oberfläche, sondern aus einer Betrachtung der gesamten Oberfläche, also einer dreidimensionalen Darstellung der Oberfläche ermittelt.

Ausgehend von der in Figur 3 a) gezeigten Nulllinie werden zur Bestimmung der mittleren quadratischen Höhe Sq der Oberfläche alle lokalen Abweichungen z(x) von der Nulllinie quadriert, aufsummiert und durch die Länge der Messtrecke dividiert. Von diesem Ergebnis wird anschließend die quadratische Wurzel gezogen. Effektiv erhält man so eine Aussage darüber, wie sehr die Oberfläche im Mittel von der Nulllinie abweicht, also wie rau die Oberfläche ist. Je größer dieser Wert ist, desto rauer ist die Oberfläche.

Zur Bestimmung der Kernhöhe Sk wird zunächst für jede Höhe y auf der Ordinatenachse ermittelt, welcher Anteil der Oberfläche höher als der betrachtete y-Wert ist. Dieser Anteil wird dann als Flächenmaterialanteil M auf der Abszissenachse eingetragen. Beispielsweise würde in der Oberfläche der Figur 3 a) bei einer Höhe von 8 μm ein Wert von 0% für den Flächenmaterialanteil ermittelt, da die Oberfläche nicht über eine Höhe von 8 μm von der Nulllinie abweicht. Für eine Höhe von 6 μm würde bereits ein niedriger einstelliger Anteil der Oberfläche ermittelt, der um mehr als +6 μm von der Nulllinie abweicht. Definitionsgemäß wäre bei der gezeigten Darstellung dem Ordinatenwert 0 μm ein Anteil von 50 % zuzuordnen, da die Nulllinie genau gleiche Anteile der Oberfläche aufteilt. Grundsätzlich kann hier jedoch auch eine andere Nulllinie als Bezugspunkt gewählt werden. Bei einem Wert von -10 μm würde bereits ein Wert von mehr als 95% für den Flächenmaterialanteil M ermittelt, während ab einem Ordinatenwert von etwa -13 μm 100% der Oberfläche oberhalb dieses Wertes liegen.

Eine beispielhafte Verteilung 300 dieser Art ist in der Figur 3 b) gezeigt. Zur Bestimmung der Kernhöhe Sk aus dieser Verteilung wird dabei in einem ersten Schritt die Äquivalenzgrade der Verteilung 300 des Flächenmaterialanteils bestimmt. Hierzu wird ein Bereich des Flächenmaterialanteils M, auf den ein Flächenmaterialanteil ΔM von 40 % entfällt so lange entlang der Ordinatenachse verschoben, bis derjenige Bereich gefunden wurde, innerhalb dessen die Sekante der Endpunkte des Bereichs ΔM mit der Kurve 300 der Verteilung des Flächenmaterialanteils die geringstmögliche Steigung aufweist. Dies ist in der Figur 3 b) beispielhaft für drei verschiedene Bereiche mit einer jeweiligen Breite $\Delta M$ von 40 % gezeigt. Für den ersten Bereich $\Delta M_1$ sind dabei die entsprechenden Punkte $s_1 1$ und $s_1 2$ eingezeichnet, die auf der Kurve 300 des Flächenmaterialanteils dem Bereich $\Delta M_1$ entsprechen. Aus diesen Schnittpunkten $s_1 1$ und $s_1 2$ ergibt sich die Sekante 301 der Kurve 300 des Flächenmaterialanteils für den ersten Bereich $\Delta M_1$. Analog hierzu sind auch die Sekante 302 für den zweiten Bereich $\Delta M_2$ aus den Schnittpunkten $s_2 1$ und $s_2 2$, sowie die Sekante 303 für den dritten Bereich $\Delta M_3$ aus den Schnittpunkten $s_3 1$ und $s_3 2$ ermittelt worden.

Von den dargestellten Kurven 301, 302 und 303 weist dabei die mittlere Kurve 302 die geringste auffindbare Steigung auf. Diese Kurve 302 der geringsten Steigung, die nach dem zuvor skizzierten Verfahren ermittelt wurde, wird auch als Äquivalenzgrade bezeichnet. Zur Bestimmung der Kernhöhe Sk wird die Äquivalenzgrade auf Flächenanteile von 0% (Schnittpunkt mit der Abszissenachse) und 100% (Schnittpunkt $S_{100}$) extrapoliert. Aus den Schnittpunkten der Äquivalenzgrade mit den Ordinantenwerten für die Flächenanteile 0% und 100% wird dann die Kernhöhe Sk als Abstand dieser Schnittpunkte entlang der Abszissenachse bestimmt. Eine geringe Kernhöhe ist dabei gleichbedeutend mit einer hohen Materialdichte der Oberfläche, was wiederum zu einer hohen Robustheit der Oberfläche gegen mechanische Beanspruchung beiträgt. Beispielhaft beträgt die Kernhöhe Sk der in Figur 3 a) gezeigten Oberfläche 12,7 $\mu$m.

Ein weiterer relevanter Parameter zur Beschreibung der Oberfläche der Beschichtung ist die Schiefheit Ssk (engl. Skewness) der Oberfläche. Wie zuvor bereits ausgeführt, beschreibt die Skewness, ob die Oberfläche eher als Fläche mit Spitzen (positive Schiefheit) oder Fläche mit Rillen (negative Schiefheit) beschrieben werden kann. Dies ist gleichbedeutend mit der Frage, ob die Ausschläge der Oberfläche von Nulllinie tendenziell häufiger in positive Bereiche oder in negative Bereiche erfolgen. Finden sich also entlang der Messstrecke mehr Positionen, für die der Ordinatenwert positiv ist, ist auch die Schiefheit Ssk positiv, finden sich entlang der Messstrecke mehr Positionen für die der Ordinatenwert negativ ist, ist auch die Schiefheit Ssk negativ. Dabei kann für zwei Oberflächen mit identischen Werten für die mittlere quadratische Höhe Sq der Wert der Schiefheit durchaus unterschiedlich sein, da die Ausschläge über oder unter den Mittelwert der Oberflächenhöhe aufgrund der Berechnung aus den quadrierten Höhen der Oberfläche zur Bestimmung des Wertes Sq die Frage der Richtung der Ausschläge nicht berücksichtigt. Beispielhaft weist die Oberfläche der Figur 3 a) eine Schiefheit Ssk von -0,33 auf, ist also tendenziell eher als Fläche mit Rillen zu bezeichnen.

Eine vergleichbare, statistische Betrachtung der Oberflächenbeschaffenheit ermöglicht auch der weitere hier betrachtete Oberflächenparameter der Kurtosis Sku. Die Kurtosis berechnet sich dabei aus der Summe über die vierten Potenzen der lokalen Höhe der Oberfläche z(x), normiert über die Messstrecke und ferner geteilt durch die mittlere quadratische Höhe Sq in der vierten Potenz. Effektiv wird hierbei betrachtet, wie häufig ein bestimmter Wert z entlang der Messstrecke auftritt, unabhängig von dessen Vorzeichen. Für einen Wert Sku = 3 sind dabei die verschiedenen Werte für die Höhe der Oberfläche um die Nulllinie normalverteilt. Bei einem Wert für Sku von < 3 weist die Oberfläche tendenziell eine eher rundliche Struktur auf, während ein Wert Sku > 3 für tendenziell eher spitze, zackenartige Strukturen der Oberfläche spricht. Dabei hat die in Figur 3 a) gezeigte Oberfläche eine Kurtosis Sku von 2,77, weist also eine eher abgerundete Oberflächenstruktur auf.

Im Folgenden wird anhand von zwei Ausführungsbeispielen beschrieben, wie eine Beschichtung mit den zuvor beschriebenen und beanspruchten Eigenschaften erzeugt werden kann.

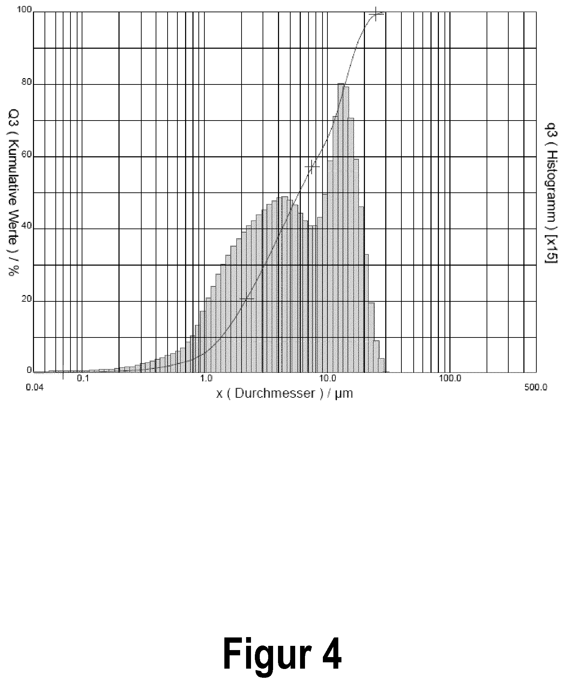

Hierzu offenbart die Figur 4 ein Histogramm einer beispielhaften Korngrößenverteilung eines Glasflusses zur Herstellung einer Beschichtung. Die Partikel des Glasflusses weisen dabei in Gew.-% auf Oxidbasis die nachfolgende Zusammensetzung auf:

| | |
|---|---|
| $SiO_2$ | 81 |
| $B_2O_3$ | 13 |
| $Al_2O_3$ | 2 |
| $Na_2O$ | 3,5 |
| $K_2O$ | 0,5 |

Zur Erzeugung des Glasflusses wird ein gemäß obiger Zusammensetzung erschmolzenes Glas zermahlen, wobei im vorliegenden Fall eine Nassmahlung mit Wasser durchgeführt wurde. Der so erzeugte Glasfluss weist eine Korngrößenverteilung $D_{10}$ von 1,37 $\mu$m, $D_{90}$ von 17,02 $\mu$m und $D_{99}$ von 24,10 $\mu$m auf.

Der so erzeugte Glasfluss wurde anschließend mit einem Siebdruckmedium auf Basis von Dipropylenglykolmonomethylether (DPM) als Lösungsmittel bei einem Anpastverhältnis von 10:6 (Glasfluss zu Siebdruckmedium) vermischt. Die so erzeugte Tinte wurde dann mit einem Sieb der Siebstärke 140-31 mittels Siebdruck auf ein keramisierbares Glassubstrat aufgebracht und gemäß dem zuvor beschriebenen Keramisierungsprogramm eingebrannt.

Neben dem zuvor genannten Glasfluss kann dabei ein weiterer Glasfluss beigemischt werden, um die Beschichtung in ihren Eigenschaften an das verwendete Substrat anzupassen. Dabei kann beispielhaft ein Glasfluss der nachfolgenden Zusammensetzungen verwendet werden:

| | |
|---|---|
| $SiO_2$ | 54,3 |
| $B_2O_3$ | 16,7 |
| $Al_2O_3$ | 16,6 |
| $Li_2O$ | 3,1 |

| (fortgesetzt) | |
| --- | --- |
| MgO | 1,7 |
| CaO | 2,0 |
| SrO | 2,3 |
| ZnO | 2,2 |
| $ZrO_2$ | 1,1. |

Ein solcher Glasfluss unterscheidet sich beispielsweise in seiner Erweichungstemperatur und in seinem thermischen Ausdehnungskoeffizienten von dem zuvor genannten Glasfluss, sodass durch Mischung dieser Glasflüsse eine Einstellung der mechanischen und thermischen Eigenschaften der erzeugten Beschichtung möglich wird.

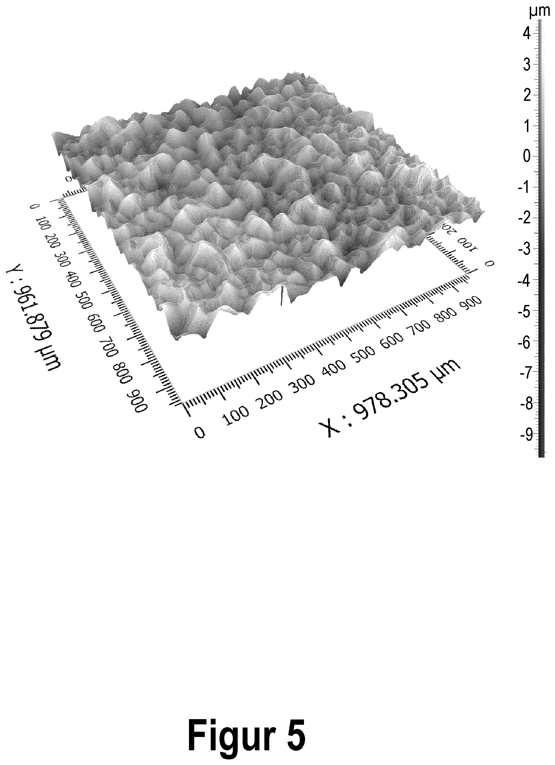

Die Figur 5 zeigt dabei einen lokalen Ausschnitt über eine Fläche von etwa 1 mm$^2$ aus dem Oberflächenprofil der so erhaltenen Beschichtung in perspektivischer Ansicht. Die mittlere quadratische Höhe Sq der so erhaltenen Oberfläche beträgt 1,21 µm, die Kernhöhe Sk liegt bei 3,1 µm, die Schiefheit Ssk bei 0,01 und die Kurtosis Sku bei 3,05. Ferner weist die Oberfläche eine mittlere arithmetische Höhe Sa von 0,96 µm auf.

Die mittlere arithmetische Höhe Sa berechnet sich dabei aus der Fläche A der Beschichtung und der Höhe z der Beschichtung gemäß folgender Vorschrift:

$$Sa = \frac{1}{A} \iint_A |z(x,y)|\, dx\, dy$$

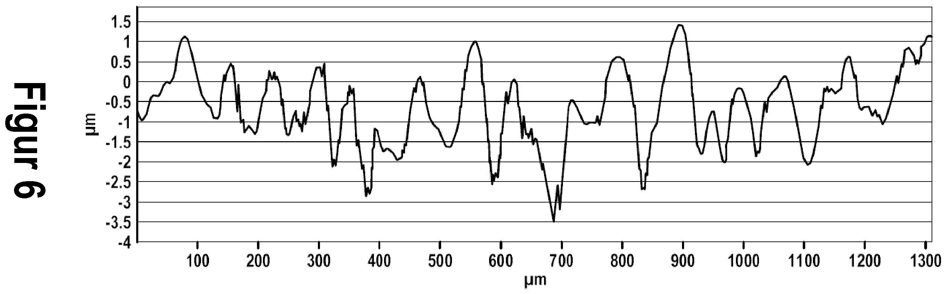

Exemplarisch ist ferner in Figur 6 eine Darstellung des Oberflächenprofils entlang einer Linie innerhalb der in Fig. 5 gezeigten Oberfläche wiedergegeben.

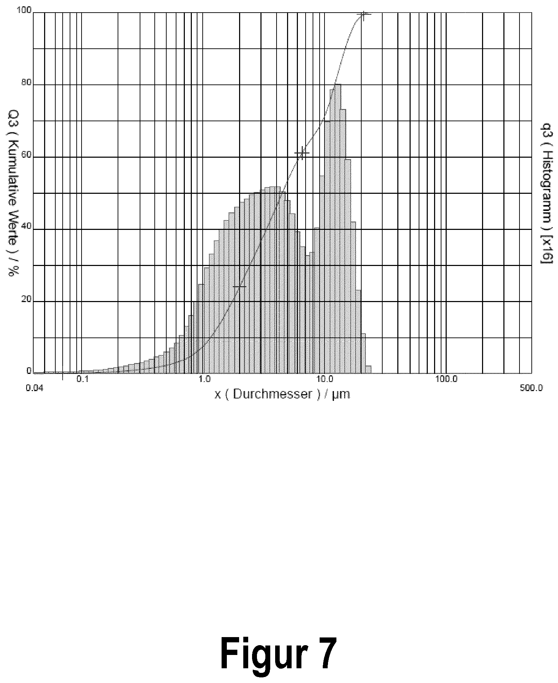

Die Figur 7 zeigt ein weiteres Histogramm einer beispielhaften Korngrößenverteilung eines Glasflusses zur Herstellung einer Beschichtung für ein beispielhaftes Glaskeramikprodukt. Der Glasfluss besteht dabei aus demselben Material wie der Glasfluss, der zuvor mit Bezug auf die Figur 4 beschrieben wurde. Auch in dem Fall der Figur 7 wurde das Glas mittels Nassmahlung zermahlen, wodurch sich die dargestellte Korngrößenverteilung ergibt. Dabei beträgt $D_{10}$ 1,15 µm, $D_{90}$ 14,72 µm und $D_{99}$ 19,89 µm. Der so erhaltene Glasfluss wurde in einem Anpastverhältnis von 10:12 mit einem Naphtabasiertem Siebdruckmedium vermischt und mittels eines Siebs der Stärke 77-55 auf die Oberfläche eines Substrats analog zu dem Ausführungsbeispiel der Figur 4 aufgebracht und mit der Keramisierung des Substrats eingebrannt.

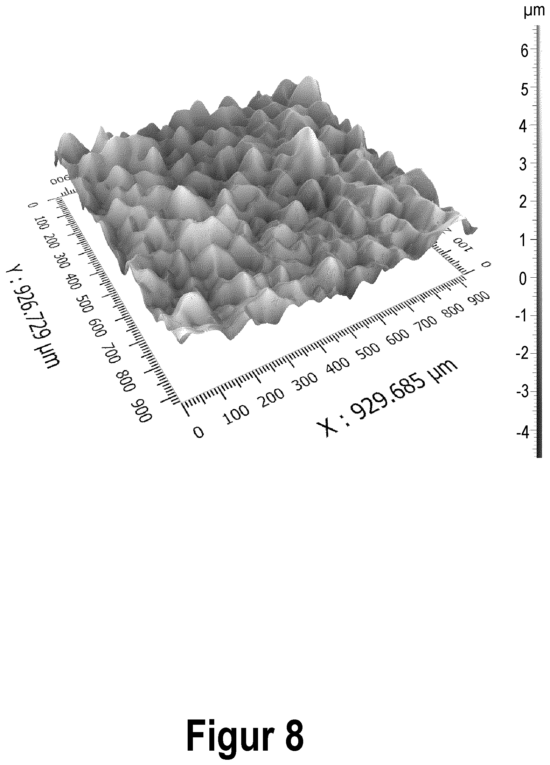

Die Figur 8 zeigt einen lokalen Ausschnitt über eine Fläche von etwa 1 mm$^2$ aus dem Oberflächenprofil der so erhaltenen Beschichtung in perspektivischer Ansicht. Die mittlere quadratische Höhe Sq der so erhaltenen Oberfläche beträgt 1,6 µm, die Kernhöhe Sk liegt bei 3,9 µm, die Schiefheit Ssk bei 0,045 und die Kurtosis Sku bei 3,46. Ferner weist die Oberfläche eine mittlere arithmetische Höhe Sa von 1,25 µm auf.

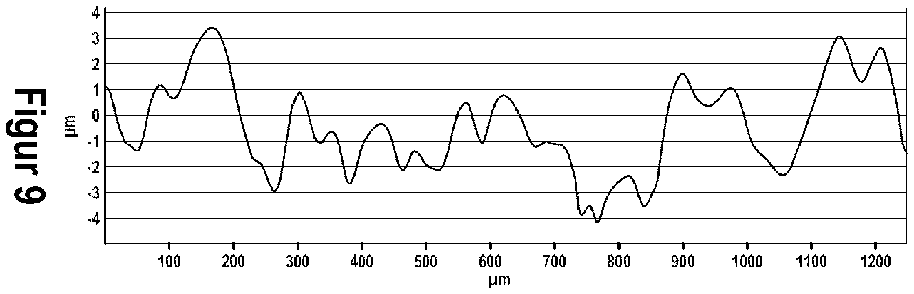

Exemplarisch ist ferner in Figur 9 eine Darstellung des Oberflächenprofils entlang einer Linie innerhalb der in Fig. 8 gezeigten Oberfläche wiedergegeben.

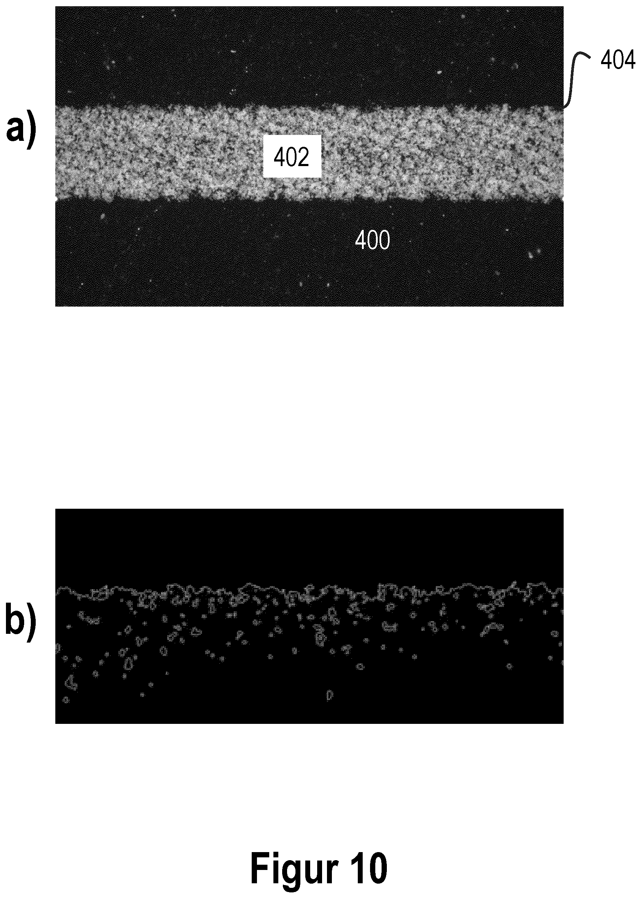

Die Figur 10 zeigt in Figur a) eine Schwarz-Weiß Abbildung eines beispielhaften Glaskeramikprodukts mit einer unter der Beschichtung angeordneten farbigen Dekorschicht. Eine solche Abbildung kann beispielsweise mit einem Lichtmikroskop erzeugt werden. Durch die granulare Struktur der Beschichtung erscheint die an sich weitgehend homogene Dekorschicht und insbesondere die üblicherweise sehr scharfe Konturlinie 404 des Dekors, die den Übergang zwischen dekoriertem Bereich 402 und undekoriertem Substrat 400 darstellt, verwaschen bzw. ausgefranst.

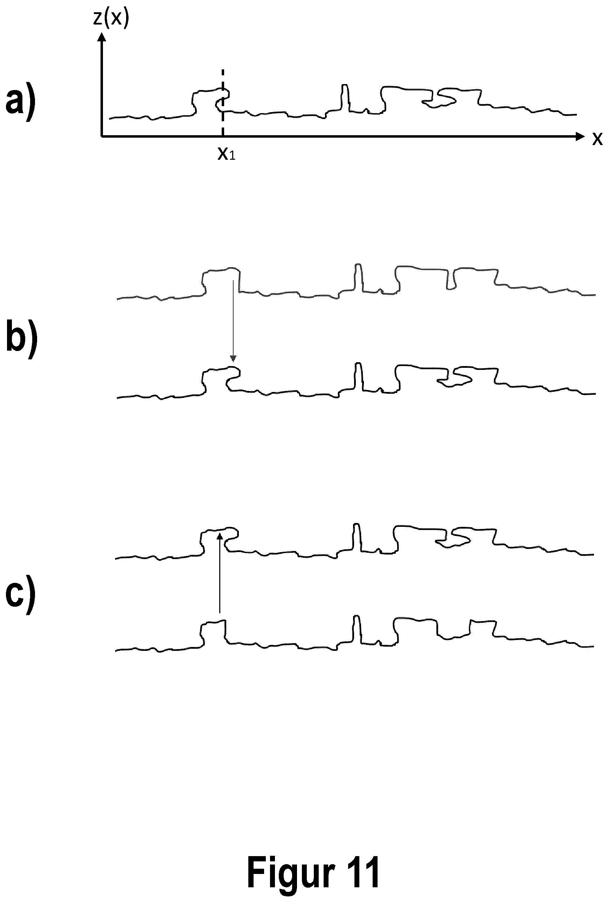

Zur Beschreibung der Beschaffenheit der Konturlinie 404 kann mit einfachen Mitteln zunächst der konkrete Verlauf der Konturlinie 404 aus der Darstellung der Figur 11 a) extrahiert werden. Hierzu kann ein Grauwert zwischen 0 und 100 stellvertretend für eine Farbwirkung des Dekors zwischen 0% und 100% als Grenzwert festgesetzt werden, beispielsweise der Wert 20. Allen Messpunkten, deren Grauwerte in der Darstellung der Figur 11 a) oberhalb oder unterhalb des festgesetzten Grenzwerts liegen, wird der Grauwert 0 zugeordnet, während allen Messpunkten mit einem Grauwert von 20 der Wert 100 zugeordnet wird. Dabei kann neben einem diskreten Grenzwert auch ein Bereich von Grenzwerten festgelegt werden, die als Konturlinie angenommen werden sollen, beispielsweise alle Grauwerte zwischen 15 und 20.

Das Resultat dieser Operation ist schematisch in der Figur 11 b) für die obere Hälfte des in Figur 11 a) dargestellten Ausschnitts gezeigt. Wie in der Figur 11 b) erkennbar ist, werden durch die Anwendung eines Grenzwerts für die Grauwerte der Messpunkte mitunter auch Flecke innerhalb des Dekors, die ebenfalls durch eine optische Verzerrung durch die strukturierte Beschichtung verursacht werden, als Konturlinie interpretiert. Solche Punkte können entweder händisch aus der Darstellung entfernt werden, oder es kann ein Bereich festgelegt werden, innerhalb dessen die Konturlinie betrachtet werden soll, sodass außerhalb dieses Bereichs liegende Punkte nicht mehr berücksichtigt werden.

Auf diesem Weg kann eine diskrete Konturlinie ermittelt werden, wie sie beispielhaft in der Figur 11 a) gezeigt ist. Aufgrund der optischen Verzerrungen durch die über der Dekorschicht angeordneten strukturierten Beschichtung kann es dabei vorkommen, dass entlang der Konturlinie bei Betrachtung der Konturlinie in einem x-z-Diagramm Punkte auf der x-Achse existieren, für die es zwei unterschiedliche Punkte auf der z-Achse gibt, die auf der Konturlinie liegen. In der Figur 11 a) ist dies beispielsweise an Punkt x1 der Fall, da diesem Punkt kein eindeutiger Wert z zugeordnet werden kann, der auf der Konturlinie liegt, da eine zur z-Achse parallele Gerade durch den Punkt x1 die Konturlinie an zwei Punkten schneidet.

Zur Bestimmung des quadratischen Mittelwerts aller Ordinatenwerte der Konturlinie ist jedoch eine Kurve notwendig, die jedem Wert x nur einen Wert z(x) zuordnet, sodass in einem weiteren Schritt die Kurve in eine entsprechend angepasste Kurve umgewandelt werden muss. Dies kann entweder dadurch geschehen, dass jedem Punkt x, dem mehrere Ordinatenwerte z(x) zugeordnet werden können, jeweils der höchste Wert z(x) der auf der Konturlinie liegt, zugeordnet wird. Dies ist beispielhaft in der Figur 11 b) dargestellt. Umgekehrt kann auch jedem Punkt x jeweils der niedrigste Ordinatenwert z(x) auf der Konturlinie zugeordnet werden, wie in Figur 11 c) dargestellt.

Aus den so erhaltenen Konturlinien kann dann der quadratische Mittelwert, gleichbedeutend mit dem quadratischen Mittenrauwert Rq bestimmt werden. Dabei ist es auch möglich, dass für beide Konturlinien der Figur 11 b) und Figur 11 c) jeweils der Wert Rq bestimmt wird und der Mittelwert dieser beiden Werte als tatsächlicher Wert der Konturlinie angenommen wird. Auf diesem Weg kann eine Aussage darüber getroffen werden, wie stark eine an sich scharfe Konturlinie eines Dekors durch die auf dem Dekor abgeschiedene strukturierte Beschichtung verzerrt wird.

Neben dem zuvor beschriebenen Wert Rq können auch weitere Parameter zur Charakterisierung des Verlaufs der Konturlinie bestimmt werden, die aus der Analyse von Oberflächenbeschaffenheiten bekannt sind. So können beispielsweise auch die zuvor mit Bezug auf die Beschaffenheit der Oberfläche 114 der Beschichtung 104 eines beispielhaften Glas- oder Glaskeramikprodukts 100 beschriebenen zweidimensionalen Parameter Sa, Ssk und Sku jeweils in eindimensionaler Form, also Ra, Rsk und Rku für den Verlauf der Konturlinie ermittelt werden. Dabei beträgt der arithmetische Mittenrauwert Ra der Konturlinie bevorzugt höchstens 15 μm, während für die Schiefheit (Skewness) Rsk bevorzugt ein Wert kleiner Null vorliegt. Weiter bevorzugt ist die Kurtosis Rku der Konturlinie größer als 3.

Die Figur 13 zeigt einen beispielhaften Messaufbau zur Bestimmung des Halo Wertes eines beispielhaften Glas- oder Glaskeramikprodukts 100. Dabei ist in einer Dunkelkammer 500 auf einer vibrationsdämmenden Unterlage 502 eine Halterung 504 angeordnet, auf der eine Lichtquelle 506 mit einem Leuchtmittel, beispielsweise einer weißen Sieben-Segment-Anzeige angeordnet ist. Auf die Lichtquelle kann wiederum der zu prüfende Artikel 508, insbesondere ein scheibenförmiges Substrat aufgelegt werden, wobei durch zwischen dem Artikel 508 und der Lichtquelle 506 angeordnete Distanzstücke ein definierter Abstand zwischen Leuchtmittel und Unterseite des Artikels 508 hergestellt werden kann. Oberhalb des Artikels 508 ist lotrecht über der Lichtquelle 506 bzw. über dem verwendete Leuchtmittel eine Kamera 512 mit einem Objektiv 514 angeordnet, das auf die Oberfläche des Leuchtmittels fokussiert ist. Die Kamera 512 kann dabei beispielsweise in einem Abstand von etwa 30 - 35 cm über der Lichtquelle 506 angeordnet sein.

Zur Bestimmung des Halo Wertes werden dann eine Nullmessung in Abwesenheit des Artikels 508 und eine Messung mit Artikel 508 durchgeführt, wobei jeweils das Abbild des Leuchtmittels in Graustufen aufgenommen wird. Aus den so gewonnen Bildern und insbesondere den hieraus ermittelbaren Verläufen der Intensitätsverteilung bei einem Schnitt quer durch das aufgenommene Bild kann dann der Halo Wert wie zuvor beschrieben ermittelt werden.

Die hierin verwendeten und beschriebenen Oberflächenparameter Sq, Sk, Ssk, Sku und Sa werden beispielhaft auch in der DIN EN ISO 25178-2:2023-09 beschrieben.

Obwohl die vorliegende Erfindung anhand bevorzugter Ausführungsbeispiele beschrieben wurde, ist sie nicht darauf beschränkt, sondern auf vielfältige Weise modifizierbar.

Bezugszeichenliste

| | |
|---|---|
| 100 | Glas- oder Glaskeramikprodukt |
| 102 | Substrat |
| 104 | Beschichtung |
| 106 | Oberfläche des Substrats |
| 108 | Dekor |
| 110 | Ausnehmung |
| 112 | Anzeigevorrichtung |
| 114 | Oberfläche der Beschichtung |
| 116 | Unterseite des Substrats |
| 300 | Verteilung des Flächenmaterialanteils |
| 301 | Sekante |
| 302 | Äquivalenzgrade |
| 303 | Sekante |

**Patentansprüche**

1. Glas- oder Glaskeramikprodukt mit einem Substrat aus einem Glas oder einer Glaskeramik,

   wobei das Substrat zumindest auf einer Seite auf zumindest einem Teil seiner Oberfläche mit einer im Wesentlichen pigmentfreien Beschichtung versehen ist, wobei die Beschichtung einen zumindest teilweise aufgeschmolzenen Glasfluss aufweist,
   wobei die Oberfläche der Beschichtung eine mittlere quadratische Höhe Sq von mindestens 0,1 μm und höchstens 2,5 μm aufweist, und
   wobei die Beschichtung eine Kernhöhe Sk von mindestens 1,0 μm bis höchstens 10 μm aufweist.

2. Glas- oder Glaskeramikprodukt nach Anspruch 1, wobei die Beschichtung einen Glanzwert von höchstens 25 unter einem Betrachtungswinkel von 60° aufweist.

**3.** Glas- oder Glaskeramikprodukt nach Anspruch 1 oder 2, wobei die Beschichtung eine Schiefheit Ssk von > 0 aufweist.

**4.** Glas- oder Glaskeramikprodukt nach einem der vorherigen Ansprüche, wobei die Beschichtung eine Kurtosis Sku von > 3 aufweist.

**5.** Glas- oder Glaskeramikprodukt nach einem der vorherigen Ansprüche, wobei die Beschichtung eine Dicke von 2 bis 10 $\mu$m aufweist.

**6.** Glas- oder Glaskeramikprodukt nach einem der vorherigen Ansprüche, wobei zwischen dem Substrat und der Beschichtung zumindest abschnittsweise eine pigmentierte Dekorschicht angeordnet ist.

**7.** Glas- oder Glaskeramikprodukt nach Anspruch 6, **dadurch gekennzeichnet, dass** die Konturlinie der unter der Beschichtung angeordneten Dekorschicht bei senkrechter Draufsicht auf das Dekor durch die Beschichtung hindurch in Richtung parallel zur Oberfläche des Substrats einen quadratischen Mittenrauwert Rq von höchstens 20 $\mu$m aufweist.

**8.** Glas- oder Glaskeramikprodukt nach Anspruch 6 oder 7, wobei die Kombination aus Dekorschicht und Beschichtung eine Dicke von höchstens 15 $\mu$m aufweist.

**9.** Glas- oder Glaskeramikprodukt nach einem der vorherigen Ansprüche, wobei die Beschichtung auf einer Seite des Substrats vollflächig aufgebracht ist.

**10.** Glas- oder Glaskeramikprodukt, wobei der Glasfluss die folgende Zusammensetzung in Gew.-% auf Oxidbasis aufweist:

| | |
|---|---|
| SiO$_2$ | 75 - 85 |
| Al$_2$O$_3$ | 0,1 - 5 |
| B$_2$O$_3$ | 10 - 15 |
| Na$_2$O | 1 - 5 |
| K$_2$O | 0,1 - 1,5 |

**11.** Glas- oder Glaskeramikprodukt nach einem der vorherigen Ansprüche, **dadurch gekennzeichnet, dass** das Substrat scheibenförmig ist und eine Dicke zwischen 2 mm und 6 mm, bevorzugt zwischen 3 mm und 5 mm, besonders bevorzugt 4 mm aufweist.

**12.** Glas- oder Glaskeramikprodukt nach einem der vorherigen Ansprüche, **dadurch gekennzeichnet, dass** das Substrat transparent mit einer Transmission $\tau_{vis}$ von größer 80% ist und eine Buntheit c* von weniger als 10, insbesondere weniger als 8 aufweist.

**13.** Glas- oder Glaskeramikprodukt nach einem der Ansprüche 1 bis 11, **dadurch gekennzeichnet, dass** das Substrat volumengefärbt ist und eine Transmission $\tau_{vis}$ von 2 % bis 10% aufweist.

**14.** Glas- oder Glaskeramikprodukt nach einem der Ansprüche 1 bis 11, **dadurch gekennzeichnet, dass** das Substrat transluzent mit einer Transmission $\tau_{vis}$ von 2% bis 25% oder opak mit einer Transmission $\tau_{vis}$ von 0,1% bis 2% ist.

**15.** Glas- oder Glaskeramikprodukt nach einem der vorherigen Ansprüche, **dadurch gekennzeichnet, dass** das Substrat aus einer LAS-Glaskeramik besteht.

**16.** Glas- oder Glaskeramikprodukt nach einem der vorherigen Ansprüche, **dadurch gekennzeichnet, dass** eine in einem Abstand von 0,5 mm unterhalb des Glas- oder Glaskeramikprodukts angeordnete Leuchtquelle bei einer Dicke des Substrats von 4 mm ein Halo von höchstens 1,2 erzeugt.

**17.** Verfahren zur Herstellung eines Glaskeramikprodukts nach einem der vorherigen Ansprüche, wobei das Verfahren die nachfolgenden Schritte aufweist:

    a. Bereitstellen eines Substrats aus Glas,
    b. Aufbringen einer Schicht einer Tinte umfassend einen Glasfluss und ein Druckmedium auf wenigstens einen Teilbereich einer Oberfläche des Substrats, wobei das Aufbringen bevorzugt mittels Siebdruck erfolgt,
    c. Keramisieren des beschichteten Substrats.

**18.** Verfahren nach Anspruch 17, wobei das Aufbringen der Beschichtung mittels Siebdruck erfolgt, wobei für den Siebdruck ein Sieb mit einer Siebstärke von 140-31 bis 54-64 verwendet wird.

**19.** Verfahren nach Anspruch 17 oder 18, wobei vor dem Aufbringen der Beschichtung auf das Substrat eine Dekorschicht auf das Substrat aufgebracht wird, wobei die Beschichtung anschließend zumindest abschnittsweise auf die Dekorschicht aufgebracht wird.

**20.** Tinte zur Herstellung eines Glas- oder Glaskeramikprodukts nach einem der Ansprüche 1 bis 16, wobei die Tinte einen Bor-haltigen Glasfluss und ein Druckmedium aufweist, wobei der Glasfluss eine Körnung von D$_{10}$ größer 1 $\mu$m und D$_{90}$ kleiner 20 $\mu$m, bevorzugt D$_{90}$ kleiner 15 $\mu$m aufweist.

**21.** Tinte nach Anspruch 20, wobei das Verhältnis von Glasfluss zu Druckmedium in der Tinte zwischen 10: 15 und 10:5 liegt.

a)

104    114    100

102    106    116

b)

104    114    100

108 102    106    116    108

c)

104    114    110    100    114

108 102    106    112    108    116

**Figur 1**

**Figur 2**

**Figur 3**

# Figur 4

**Figur 5**

Figur 6

# Figur 7

Figur 8

**Figur 9**

a)

404

402

400

b)

# Figur 10

a)

z(x)

$x_1$

x

b)

c)

# Figur 11

**Figur 12**

Europäisches
Patentamt

European
Patent Office

Office européen
des brevets

# EUROPÄISCHER RECHERCHENBERICHT

Nummer der Anmeldung

**EP 25 18 9481**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 117 819 823 A (SCHOTT GLASS TECHNOLOGIES SUZHOU CO LTD) 5. April 2024 (2024-04-05) * Anspruch 1 * ----- | 1-19 | INV. C03C3/083 C03C3/091 C03C3/095 C03C8/02 |
| X | US 9 714 190 B2 (FRAUNHOFER-GESELLSCHAFT ZUR FOERDERUNG DER ANGEWANDTEN FORSCHUNG [DE]) 25. Juli 2017 (2017-07-25) * Beispiele 1,2 * ----- | 20,21 | C03C17/04 C03C17/34 |
| A | JP 2023 133013 A (DAINIPPON PRINTING CO LTD) 22. September 2023 (2023-09-22) * Ansprüche; Abbildungen * ----- | 1-21 | |

RECHERCHIERTE
SACHGEBIETE (IPC)

C03C

Der vorliegende Recherchenbericht wurde für alle Patentansprüche erstellt

| Recherchenort | Abschlußdatum der Recherche | Prüfer |
|---|---|---|
| München | 17. Dezember 2025 | Saldamli, Saltuk |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**17-12-2025**

| Im Recherchenbericht angeführtes Patentdokument | Datum der Veröffentlichung | Mitglied(er) der Patentfamilie | Datum der Veröffentlichung |
|---|---|---|---|
| CN 117819823 A | 05-04-2024 | KEINE | |
| US 9714190 B2 | 25-07-2017 | DE 102012003338 A1 | 22-08-2013 |
| | | EP 2814784 A1 | 24-12-2014 |
| | | JP 6140195 B2 | 31-05-2017 |
| | | JP 2015513512 A | 14-05-2015 |
| | | US 2015038312 A1 | 05-02-2015 |
| | | WO 2013120803 A1 | 22-08-2013 |
| JP 2023133013 A | 22-09-2023 | JP 7294482 B1 | 20-06-2023 |
| | | JP 2023133013 A | 22-09-2023 |
| | | JP 2023133283 A | 22-09-2023 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2964854 B1
- WO 2023099833 A1

- EP 4077231 A1